# EUROPEAN PATENT APPLICATION

(11) **EP 1 563 983 A1**
(43) Date of publication of application: **17.08.2005**
(21) Application number: 05100855.5
(22) Date of filing: 08.02.2005
(51) Int. Cl.: B29C 47/94

(54) **Method and apparatus for altering the flow characteristics of a melt in an extrusion die**

(30) Priority: 13.02.2004 FI 20040229
(71) Applicant: Maillefer S.A., 1024 Ecublens (CH)
(72) Inventor: Harjuhahto, Hannu, 06100, Porvoo (FI); Harjuhahto, Jaakko, 06100, Porvoo (FI); Harjuhahto, Janne, 06100, Porvoo (FI)
(74) Representative: Valkeiskangas, Tapio Lassi Paavali

(57) **Abstract**

The invention relates to method in a process for preparing extruded articles by flowing heat plastified stream of extrudable resinous thermoplastic material through an extrusion orifice. The invention relates further to an extrusion process and an apparatus. In the invention the stream can be separated into a central core stream and at least one boundary stream on the outside of the core stream. Modifying additives are added to the boundary streams while maintaining physical separation of the core and boundary streams. The streams are recombined prior expelling the material out of the extrusion orifice (2), said boundary streams being applied as a relatively thin surface layer having altered properties between the core layer and the surfaces of the extrusion orifice (2). The additives can alternatively be added directly to the surface portion of the material stream without any physical separation step.

## Description

The invention relates to a method in a process for preparing extruded articles by flowing heat plastified stream of extrudable resinous thermoplastic material through an extrusion orifice. The invention relates further to an extrusion process, and also to an apparatus for preparing extruded articles.

The invention relates to a method, a process and an apparatus for extruding high viscosity polymeric materials. More specifically the invention is intended for making extrusions from high viscosity polymeric materials without generating excessive shear forces to the melt leading to melt fracture whereby higher extruding rates, lower temperatures and lower energy consumptions are achieved when compared to the prior art technique. In other words the invention can be practiced to avoid the melt flow irregularities in the forming die leading to losses in product quality and production capacity.

The tendency of polymeric materials to melt fracture and the loss of surface smoothness in an extrusion process has been the subject of intensive research effort for years. On approach to this problem have been the modifications of the resin and its molecular weight distributions, broadening it or even creating complex distributions. Such modifications, however, compromise the physical properties of the material and in fact the high performing polymers tend to have narrow processing window in the extrusion process.

It is known that the shear forces leading to surface irregularities can be decreased by lubricating the final shaping operation either by introducing lubricant to the metal surfaces of the extrusion tool or by coating the surfaces with a low friction material, for example Teflon. The difficulties in this approach are the durability of the relative soft layer of the coating material especially when abrasive materials are extruded and also the difficulties to control the distribution of the lubricant so that even lubricating layer is obtained. In many applications the lubricant must also be removed from the surface of the final product. The lubricating layer can be maintained on the metal surface of the extrusion tool by adding fluoropolymer type processing aids continuously with the polymer in to the extruder feed, and therefore the shear stresses can be diminished, but because of the fact that the total melt is treated with additives, excess amount of additives is needed, and moreover these additives, like other lubricants used in the field, tend to migrate on the surface of the final product altering the printing and adhesion properties of the final product.

The melt flow boundary conditions are effectively controlled with at least side effects by only modifying the skin layer of the melt flow. A method is known in which a part of the melt is separated and heated to reduce its viscosity, and then said separated part is applied as a surface in the extruder head. This method is however difficult to control, it has limited viscosity difference and it has high temperature load to polymer, which is highly unwanted. In methods where lower viscosity skin layer is introduced with another extruder or such on the melt in extruder head is known. This method uses however multiple equipment leading to complex structures and difficulties in controlling the equipment.

As examples of the prior art U.S. Patents 5 573 720, 4 187 269 and 4 629 650 can be mentioned.

The object of the present invention is to provide a method, a process and an apparatus by means of which the drawbacks of the prior art can be eliminated. This has been achieved by means of the present invention. The method of the invention is characterized in that the method comprises the following steps carried out before the extrusion step:
- selectively introducing and mixing modifying additives to the surface portion of the stream of extrudable resinous thermoplastic material.
The process is characterized by the step carried out before the extrusion step,
- introducing and mixing modifying additives to the surface portion of the material flow.
The apparatus is characterized in that the apparatus comprises before the extrusion orifice an introducing means for selectively introducing modifying additives to the surface portion of the stream of the stream of extrudable resinous thermoplastic material in order to have altered properties in the material forming the surface portion of the stream.

The present invention provides a method, a process and an apparatus of making polymeric extrudates having smooth surface, for example in case of film extrusion high clarity of the film. In the invention a polymeric material is fed under positive pressure through a cavity where a part of the melt travels through a mixing section, in which viscosity modifying additives are introduced and mixed to it. The part of the material into which the additives are mixed is applied as a surface onto the core of the melt. The surface of the melt has now lower viscosity then the core of the melt, boundary conditions at the die wall are modified and the flow profile will change accordingly. The modified boundary conditions create less shear to the melt allowing higher production speeds and improved surface quality when compared to the technique known in the prior art.

In the following the invention will be described in more detail by means of the attached drawing in which
figure 1 shows a flow velocity characteristic of a typical thermoplastic material flowing through an extrusion die,
figure 2 shows a flow velocity characteristic of a thermoplastic material with skin layer having lower viscosity, and
figure 3 shows one embodiment of the apparatus of the invention.

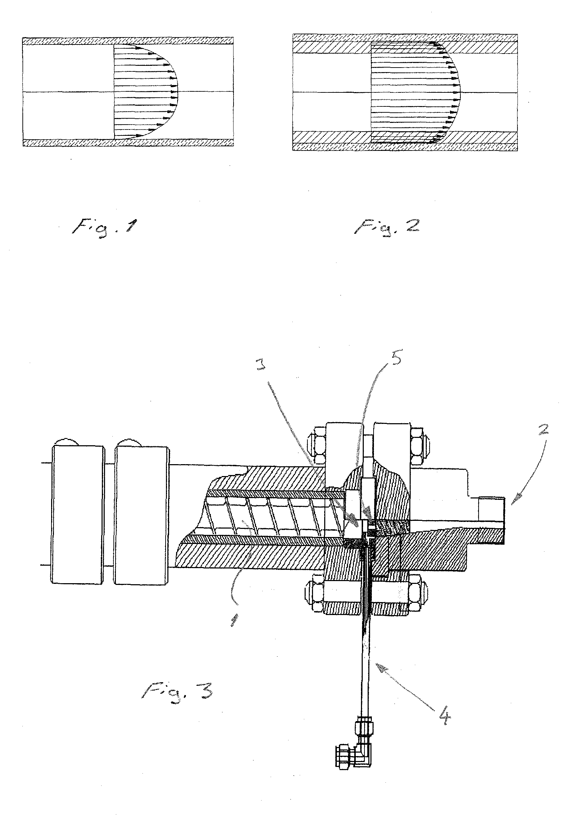

Figure 1 shows a flow velocity characteristic of a typical thermoplastic material. Figure 1 shows clearly that there are considerable velocity differences when comparing velocity values near walls and in the middle region of the flow area. Said differences are due to boundary conditions, which in the embodiment shown in figure 1 create for example rather strong shear effect to the melt whereby flow values are clearly lower near the walls when compared to the middle region of the flow area. Figure 2 shows a flow velocity characteristic of a thermoplastic material with a skin layer having lower viscosity then the core part of the flow. Figure 2 shows clearly that velocity distribution over the whole flow area is much more even when compared to the velocity distribution shown in Figure 1, i.e. in the embodiment of Figure 2 the modified boundary conditions create less shear to the melt enabling higher production speeds and improved surface quality. The present invention offers a simple way to obtain conditions shown in figure 2.

Figure 3 shows schematically one embodiment of an apparatus used in the invention. In Figure 3 reference number 1 shows a screw means by which extrudable resinous thermoplastic material transported towards an extrusion orifice 2, i.e. screw means 1 create the stream of extrudable resinous thermoplastic material. The apparatus shown in Figure 3 comprises first means 3 for physically separating the stream into a central core stream and at least one boundary stream on the outside of the core stream. Said first means 3 comprises a channel system, which is guides a part of the stream to a second means, i.e. an introducing means 4 for selectively introducing viscosity modifying additives to the boundary stream while maintaining physical separation of the core and boundary stream. Said introducing means comprises a chamber and a pipe system through which the additives can be fed to the boundary stream. The additives may comprise a mixture having a viscosity modifying component. Said chamber can be for example an integral part of the channel system of the first means 3.

The apparatus comprises further third means 4 for recombining the streams prior expelling the material out of the extrusion orifice. The boundary streams are applied as a relatively thin surface layer having altered viscosity between the core layer and the surfaces of the extrusion orifice. Said third means 5 comprise a channel system, which guides the boundary stream mixed with the additives to the core stream so that said thin surface layer is formed as told above. The streams are recombined generally near the extrusion orifice.

The embodiment of the invention described above uses means for separating the stream into two portions, i.e. to the core stream and the boundary stream, and means for recombining said two stream portions. This is however not the only way to use the invention, but it is quite possible without any separation step to introduce and mix modifying additives directly to the surface portion of the flow of extrudable resinous thermoplastic material in order to have altered properties in said surface portion.

The embodiment described in Figure 3 relates to a simple product. It is however quite possible to use the invention in connection with multi-layer film and other multi-layer product processes also. In other words Figure 3 must be seen only as an example of the principle of the invention, the invention can be used also in connection with multiple head arrangements etc.

The invention is described above with an embodiment in which viscosity of the boundary stream is altered. The term viscosity must be understood here widely, for example said term means that if the boundary stream has altered viscosity properties it means that said boundary stream is more easily-flowing stream compared to the core stream having non-altered viscosity properties. The term used describes thus functionality, e.g. flow modifying properties. It can also be said that a stream has altered viscosity properties then the stream has lower internal friction properties that the core stream with unaltered properties. The invention is however by no means restricted to viscosity but also other properties may be amended or added by using the principles of the invention. It is for example quite possible to feed an additive, having some anti-bacteria properties to the boundary stream, and thereby to create a product having certain anti-bacteria properties on the surface thereof, or alternatively having other beneficial and/or functional properties, for example reactive properties. The invention can also be used for example to obtain certain processing aid properties and grafting properties. As an example of improved properties obtainable by using the invention better adhesive properties between the layers of a multi-layer product can be mentioned.

The above described exemplary embodiments are in no way intended to restrict the invention, but the invention can be freely modified within the scope of the claims. Accordingly, it is apparent that for example the apparatus of the invention and its details do not necessarily have to be as described above, but other solutions are also feasible.

## Claims

1. Method in a process for preparing extruded articles by flowing heat plastified stream of extrudable resinous thermoplastic material through an extrusion orifice, **characterized in that** the method comprises the following step carried out before the extrusion step,
- selectively introducing and mixing modifying additives to the surface portion of the stream of extrudable resinous thermoplastic material.

2. The method of claim 1, **characterized in that** the method further comprises the following steps carried out before the extrusion step:
- physically separating the stream into a central core stream and at least one boundary stream on the outside of the core stream;
- while maintaining physical separation of the core and boundary streams, selectively introducing modifying additives to the boundary streams; and thereafter
- recombining the streams prior expelling the material out of the extrusion orifice, said boundary streams being applied as a relatively thin surface layer having altered properties between the core layer and the surfaces of the extrusion orifice.

3. The method of claim 2, **characterized in that** the streams are recombined generally near the extrusion orifice.

4. The method of claim 1 or 2, **characterized in that** the additives introduced and mixed comprise a mixture having a viscosity modifying component.

5. An extrusion process for preparing extruded articles in which process heat plastified stream of extrudable resinous thermoplastic material is arranged to flow through a extrusion orifice, the process comprising the following steps;
- providing a source of heat plastified extrudable synthetic resinous thermoplastic material;
- advancing the material along a first flow path toward the extrusion orifice,
**characterized by** the step carried out before the extrusion step,
- introducing and mixing modifying additives to the surface portion of the material flow.

6. The extrusion process of claim 5, **characterized by** the further steps
- diverting a portion of material from the first flow path to a second flow path and introducing and mixing modifying additives to the diverted flow; and
- applying the modified material as a relatively thin layer to the surface of the resin flowing in the first flow path prior to passing the material through the extrusion orifice.

7. The process of claim 6, **characterized in that** the step in which the flow paths are diverted and the step in which the modified material is applied to the first flow path are arranged to be performed before the extrusion orifice.

8. The process of claim 5 or 6, **characterized in that** the additives introduced and mixed comprise a mixture having a viscosity modifying component.

9. An apparatus for preparing extruded articles by flowing heat plastified stream of extrudable resinous thermoplastic material through an extrusion orifice, **characterized in that** the apparatus comprises before the extrusion orifice an introducing means for selectively introducing modifying additives to the surface portion of the stream of the stream of extrudable resinous thermoplastic material in order to have altered properties in the material forming the surface portion of the stream.

10. The apparatus of claim 9, **characterized in that** the apparatus further comprises first means (3) for physically separating the stream into a central core stream and at least one boundary stream on the outside of the core stream, that the introducing means (4) is arranged to introduce modifying additives to the boundary streams while maintaining physical separation of the core and boundary streams and that the apparatus further comprises third means (5) for recombining the streams prior expelling the material out of the extrusion orifice, said boundary streams being applied as a relatively thin surface layer having altered properties between the core layer and the surfaces of the extrusion orifice.

11. The apparatus of claim 10, **characterized in that** the third means is placed generally near to the extrusion orifice.
